Europäisches Patentamt

European Patent Office

Office européen des brevets

(11) Publication number: **0 292 851**
**A2**

# (12) EUROPEAN PATENT APPLICATION

(21) Application number: **88107956.0**

(22) Date of filing: **15.11.83**

(51) Int. Cl.⁴: **H01M 4/54**

(30) Priority: **17.11.82 US 442287**

(43) Date of publication of application:
**30.11.88 Bulletin 88/48**

(60) Publication number of the earlier application in
accordance with Art.76 EPC: **0 117 902**

(84) Designated Contracting States:
**DE FR GB IT NL**

(71) Applicant: **Ray-O-Vac Corporation**
**601 Rayovac Drive**
**Madison WI 53711(US)**

(72) Inventor: **Megahed, El-Sayed A.**
**1413 Mound Street**
**Madison Wisconsin 53711(US)**
Inventor: **Fung, Alexander Kwok-Wah**
**762 South Gammon Road**
**Madison Wisconsin 53719(US)**

(74) Representative: **Wuesthoff, Franz, Dr.-Ing. et al**
**Patentanwälte Wuesthoff -v.**
**Pechmann-Behrens-Goetz Schweigerstrasse**
**2**
**D-8000 München 90(DE)**

(54) Stable divalent silver oxide-containing cathode material.

(57) The stable AgO-containing cathode material for electrochemical cells, preferably cells containing a zinc anode, shows under X-ray analysis the presence of $AgO$, $Ag_2O$, $Ag_5Pb_2O_6$ and $Ag_2PbO_2$ and when tested by differential scanning calorimetric a thermal stability greater than that of the reactant $AgO$. The cathode material can be obtained by reacting $AgO$ and lead sulfide in an aqueous alkaline medium at elevated temperature.

EP 0 292 851 A2

## Stable AgO-containing cathode material

### TECHNICAL FIELD

The invention relates to a stable AgO-containing cathode material useful in electrochemical cells particularly in association with a zinc anode.

### BACKGROUND ART

It is well recognized in the art of electrochemical cells to provide a cell having a cathode of divalent silver oxide (AgO). This material provides, when associated with a suitable anode, e.g. zinc and a suitable electrolyte, eg. aqueous potassium hydroxide containing or saturated with zinc oxide, a cell of relatively high coulometric capacity per unit volume and of relatively high voltage.

The art is also aware that AgO has certain deficiencies as a cathode material. Specifically, in storage and between periods of use, AgO in contact with cell electrolyte tends to decompose releasing gaseous oxygen and thus simultaneously increases pressure inside a sealed cell and reduces coulometric capacity. Furthermore, AgO provides dual voltage when electrolytically discharged. Initially upon discharge, AgO provides a voltage characteristic of the AgO $\rightarrow$ Ag$_2$O reaction and thereafter provides a voltage characteristic of the Ag$_2$O $\rightarrow$ Ag reaction. Still further, a cell employing AgO as a cathode can be characterized by an initial high internal impedance. Heretofore, numerous disclosures have been made which teach solutions to one or more of these problems. In the US-A-3 017 448 and 4 078 127 is desclosed to include lead in AgO cathodes or in cells containing AgO cathodes. In Chemicals Abstracts, Vol. 89 - 223151p is disclosed the gassing of AgO can be inhibited by treatment of AgO with lead or a lead compound in an alkaline solution. US-A-3 017 448 discloses Pb°, PbO, Pb(OH)$_2$ or sodium plumbite as materials suitable for addition to an AgO electrode or treatment of an AgO electrode containing a plumbate ion and that use of his treatment enhances or extends the duration of cell discharge at a voltage characteristic of the Ag$^{++}$ $\rightarrow$ Ag$^+$ reaction. Thus, it may have tended to solve the gassing problem associated with use of AgO cathodes, his solution exacerbated the aforestated dual voltage problem.

In U.S.-A-4 078 127 is claimed the use of metallic sulfide additives, included by dry mixing metallic sulfides and AgO, in AgO-containing cathodes. Specifically, sulfides of cadmium, calcium, mercury, tin, tungsten (or mixtures thereof) were included in cathode mixtures to inhibit AgO gassing, to lower cell impedance both initially and during discharge and to provide a single voltage discharge of a cell having an AgO-containing cathode. As an additive, cadmium sulfide was found to be most effective under the conditions of mix preparation. Under those conditions, it is disclosed that amounts of lead sulfide up to 3 % of AgO copresent in cathode mixes were not found to be beneficial to the stability of AgO and were found to be detrimental to the impedance of cells stored for 2 and 3 weeks at 71 $^\circ$ C (168 $^\circ$ F).

In addition to the aforelisted prior art, other prior art exists relative to the properties, formation and stability of AgO. "Electrode Phenomena of Silver-Silver Oxide System in Alkaline Batteries" by Shiro Yoshizawa and Zenichro Takehara published in the Journal of the Electrochemical Society of Japan, Volume 31, Number 3, pages 91-104 (1963) reports the effect of various metallic additives on the oxidation of silver electrodes. Among the additives studies by the Japanese, was gold which was reported to increase the rate of formation of divalent silver oxide during the electrochemical formation of silver electrodes, i.e., oxidation of silver. Another article entitled "The Electric Resistivity of Silver Oxide" by Aladar Tvarusko published in the Journal of the Electrochemical Society, Volume 115, Number 11, pages 1105-1110 (November, 1968) reported on various metallic additives and their effect on the electric resistivity of divalent silver oxide. The article reports that mercury and lead added during the preparation of silver oxide decreased the electric resistivity of silver oxide. The article further confirms the disclosure in U.S.-A-3 017 448 that the use of lead in an AgO cathode enhances the time during discharge during which the cathode exhibits voltaic properties characteristic of the Ag$^{++}$ $\rightarrow$ Ag$^+$ reaction.

The patent literature also contains publications disclosing additives for alkaline batteries employing silver positive electrodes. U.S.-A-3 617 384 discloses a secondary zinc alkaline cell in which gold or silver, alloys thereof, oxides and hydroxides may be added to the zinc anode. U.S.-A-3 650 832 discloses certain additives for divalent silver oxide selected from mercury selenium, tellurium and combinations of mercury with tin or lead. JP-A- 48-1929, 1973 discloses adding gold hydroxide into the electrolyte of an alkaline silver oxide cell. U.S.-A-3 853 623 discloses gold ion additive for divalent silver oxide. U.S.-A-3 935 026 and GB-A-1 474 895 disclose a cathode material which is a mixture of divalent silver oxide and sulfur and a cathode material which is a mixture of divalent silver oxide and silver sulfide. GB-A-1 065 059 discloses the addition of cadmium oxide, magnesium oxide, or aluminum oxide to a silver electrode.

Even in view of the extensive developments in this field, there is a need for a more effective and more easily controllable means for providing stable, single voltage-producing, low impedance-producing AgO cathode material.

## SUMMARY OF THE INVENTION

The present invention contemplates a stable, single potential AgO-containing cathode material for an electrochemical cell showing under X-ray analysis the presence of AgO, $Ag_5Pb_2O_6$, $Ag_2PbO_2$ and $Ag_2O$ and showing when tested by differential scanning calorimetry a thermal stability greater than that of the reactant AgO, said material can be obtained by reacting in liquid aqueous alkaline medium at a temperature of at least $40°C$ up to the boiling point of the medium powdered AgO and powdered lead sulfide, the weight ratio of AgO to lead sulfide being in the range of 2.3 : 1 to 31 : 1 and thereafter recovering the reaction product from the aqueous medium. The reaction is carried out under mixing conditions such that a reasonable amount of interparticle trituration (contact) occurs.

The reaction product of the reaction between AgO and PbS in an aqueous alkaline medium is a dark powder distinct from the 2 reactants and is generally recovered from the aqueous medium by decantation followed by washing with distilled water and drying. X-ray analysis of the product indicates the presence of not only AgO but also relatively large amounts of $Ag_5Pb_2O_6$, relatively small amounts of $Ag_2PbO_2$ and $Ag_2O$. The product is characterized by an absence of $Ag_2S$ which is formed when a similar reaction is conducted using AgO and CdS as reactants.

This reaction product, alone or along with cadmium sulfide (as taught in U.S.-A-4 078 127) is mixed with a lubricating amount of polytetrafluoroethylene powder, typically 1 % by weight, and compressed to form a cathode body, e.g., a tablet for use in button-type cells. The cathode, with or without cadmium sulfide, exhibits a single potential characteristic of the $Ag^+ \rightarrow Ag^o$ reaction and a coulometric capacity characteristic of the amount of divalent silver in the cathode. Among the many advantages of the cathodic material produced by the process of the present invention are high stability evidenced by a low gassing rate of less than 10 μl/g•h when tested at $74°C$ in 18% aqueous NaOH plus 1.25% ZnO and very slight cell expansions when employed against a zinc anode with an aqueous KOH (ZnO) electrolyte or other electrolytes having a substantial content of alkali metal hydroxide. The cathodic material produced by the process of the present invention, compared to other AgO-containing materials, is less dusty, flows better on pelleting presses and provides stronger pellets. Cells with a zinc anode, a KOH or other alkaline electrolyte and a cathode made with material produced by the process of the present invention have low impedance both initially and throughout discharge. As those of normal skill in the art will appreciate, both pellets and consolidated cathodes made with the cathode material of the invention can contain other active or inactive ingredients and can be treated with hydrazine or other reductant, either in the pellet or consolidated form to provide a surface coating of metallic silver.

Drawings

The drawings comprise:
Figure 1 which is a scanning electron photomicrograph of AgO;
Figure 2 which is a scanning electron photomicrograph of the reaction product of AgO and PbS in alkaline medium and;
Figure 3 which is an enlarged portion of curves produced by testing the materials of Figures 1 and 2 by differential scanning calorimetry.

## BEST MODES FOR CARRYING OUT THE INVENTION

The best mode of carrying out the process of the present invention comprises reacting divalent silver oxide with about 7 % by weight of finely powdered lead sulfide in the presence of 18 % aqueous sodium hydroxide solution at about 80°C for about 1 hour, recovering, washing and drying product solids from the reaction mixture and employing the product solids in a cathode pellet made up with about 1 % polytetrafluoroethylene as lubricant and with or without an addition of a small percentage of cadmium sulfide.

As variations on this best mode, the following examples show the differences between cells having cathodes containing AgO and optionally Ag₂O and 1 % by weight of polytetrafluoroethylene (PTFE) and similar cells in which the cathode contains, instead of divalent silver oxide, the washed and dried reaction product of AgO and PbS in aqueous alkali. For experimental purposes in demonstrating the advantages of the present invention, the cells employed comprised a nickel-plated cold rolled steel cathode can containing a compressed pellet of cathode material weighing about 0.2 gram with a nickel-plated cold rolled steel sleeve interposed between the can and the pellet. The anode assembly comprised a double top (INCONEL® alloy 600 outer can and a copper-plated cold rolled steel inner can welded together) unit fitted with a Nylon 66 grommet into which amalgamated powdered zinc with a gelling agent was placed. The cathode can and anode can are then assembled and crimped using 40% aqueous KOH plus 1% zinc oxide as the electrolyte, a fibrous cotton absorber (Webril®) and a grafted polyethylene barrier (Permion®). The cell is known as RW 47 cell which is 7.9 mm in diameter and 3.6 mm in height. Uniformly, the reaction product of the process of the present invention was made by reacting under mixing conditions 100 g of AgO (of the kind and grade used in comparative cells) in 200 cm³ of 18% aqueous NaOH at about 80°C along with amounts of PbS (in weight percent of AgO) as indicated in the following tables.

Table I sets forth data with respect to characteristics of cells wherein the cathodes were made by reacting AgO with lead sulfide and other lead compounds.

## TABLE I

| Test Designation | Cathode Formula % Lead Compound Reacted | Cell Expansion at 74°C mm (mils) | | % Capacity Retention After 60°C Storage | |
|---|---|---|---|---|---|
| | | 1 Week | 4 Weeks | 20 Days | 40 Days |
| A | 0% | 0.279(11.0) | (20.0)0.508 | 70 | -0- |
| A' | 3% PbS | 0.229(9.0) | (12.0)0.305 | 52 | -0- |
| 2 | 5% PbS | 0.089(3.5) | (9.0)0.229 | 71 | 19.3 |
| 3 | 7% PbS | 0.038(1.5) | (2.0)0.051 | 94 | 90.7 |
| 4 | 9% PbS | 0.025(1.0) | (2.0)0.051 | 90 | 89.5 |
| 5 | 40 % PbS | 0.025(1.0) | (2.0) 0.051 | 92 | - |
| B | 3% Pb | 0.076(3.0) | (18.0)0.457 | 84 | -0- |
| C | 3% PbO | 0.051(2.0) | Cell Rupture | 84 | -0- |
| D | 3% PbO₂ | 0.178(7.0) | Cell Rupture | 60 | -0- |

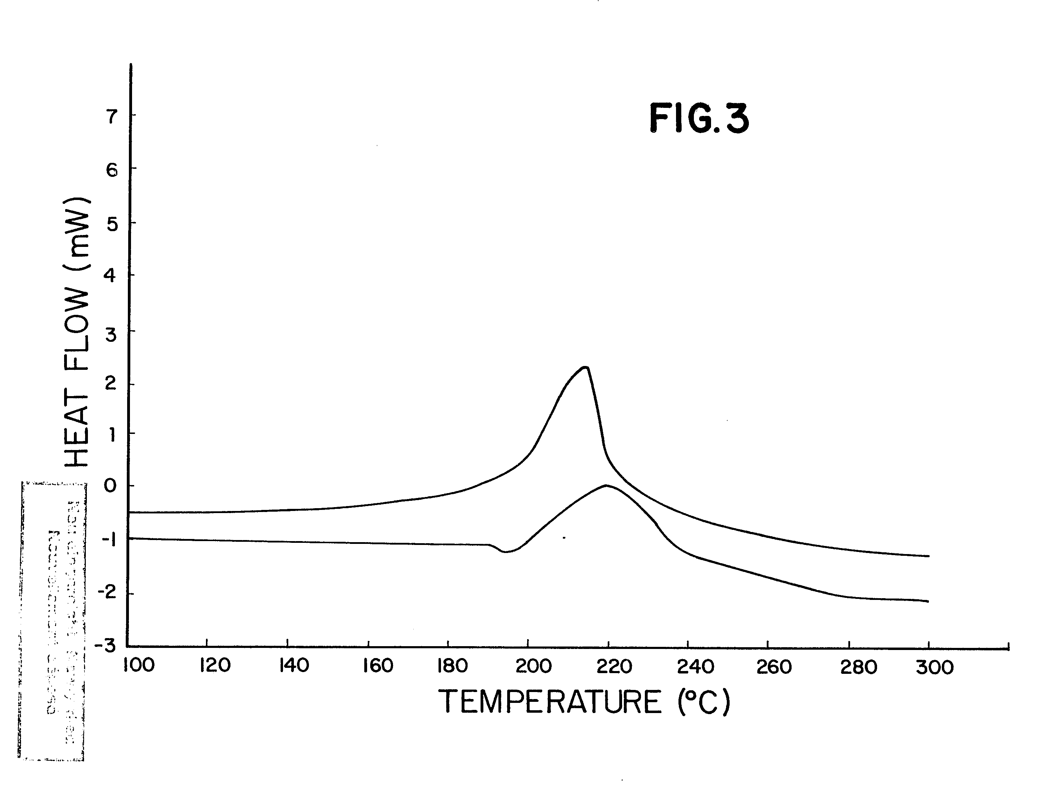

Table I shows that those tests designated by letters (outside the invention) were unsatisfactory, particularly with respect to high temperature stability. In those tests designated by numbers, the advantages of employing lead sulfide as a reactant, especially in amounts in excess of 3%, are apparent. The results of these numbered tests confirm the thermal stability of the material of the invention as depicted in Figure 3. In addition, the cells of all lettered tests exhibited two-step discharge curves under light drain conditions.

Table II sets forth data which demonstrates that the reaction of silver oxide with PbS is unique to AgO.

## TABLE II

| Test Designation | Mix | Coulometric Capacity (mAh/g ) | % Reduction From Theoretical |
|---|---|---|---|
| E | AgO Theoretical | 432 | -0- |
| F | AgO Actual[1] | 416 | 3.7 |
| G | 93% AgO + 7% PbS dry blend | 381 | 11.8 |
| 6 | 93% AgO + 7% PbS wet blend at 80°C[3] | 346 | 19.9 |
| H | Ag2O Theoretical | 232 | -0- |
| I | Ag2O Actual[2] | 227 | 2.2 |
| J | 93% Ag2O + 7% PbS dry blend[3] | 211 | 9.1 |
| K | 93% Ag2O + 7% PbS wet blend at 80°C | 210 | 9.5 |

(1)  RAYOVAC synthesized AgO.
(2)  Handy & Harmon Ag2O.
(3)  Wet blend prepared by the process steps of the best mode.

The data in Table II shows that when AgO and PbS are blended wet by 18% aqueous alkali at 80°C, the coulometric capacity of the AgO decreases significantly, whereas when $Ag_2O$ and PbS are subjected to the same conditions, no decrease takes place. This difference is evidence of reaction between PbS and AgO, but no reaction, at least of the sort involving oxidation and reduction, occurring between PbS and $Ag_2O$. This conclusion has been reinforced by X-ray and scanning electron microscopic observations which also show no evidence of a PbS-$Ag_2O$ reaction.

Table III presents data on test samples parallel to those employed in the tests reported in Table I showing the advantage of PbS as a reactant with AgO. Table III shows the dramatic drop in pellet resistivity, at least three orders of magnitude when 3% PbS is reacted with AgO to form the active material of the cathode pellet. Table III also shows that this dramatic decrease is not unique to PbS but also occurs in tests M, N and O. However, the cells of tests M, N and O show significantly higher internal impedance than the cells of tests 6 through 9, exemplifying cells of the present invention.

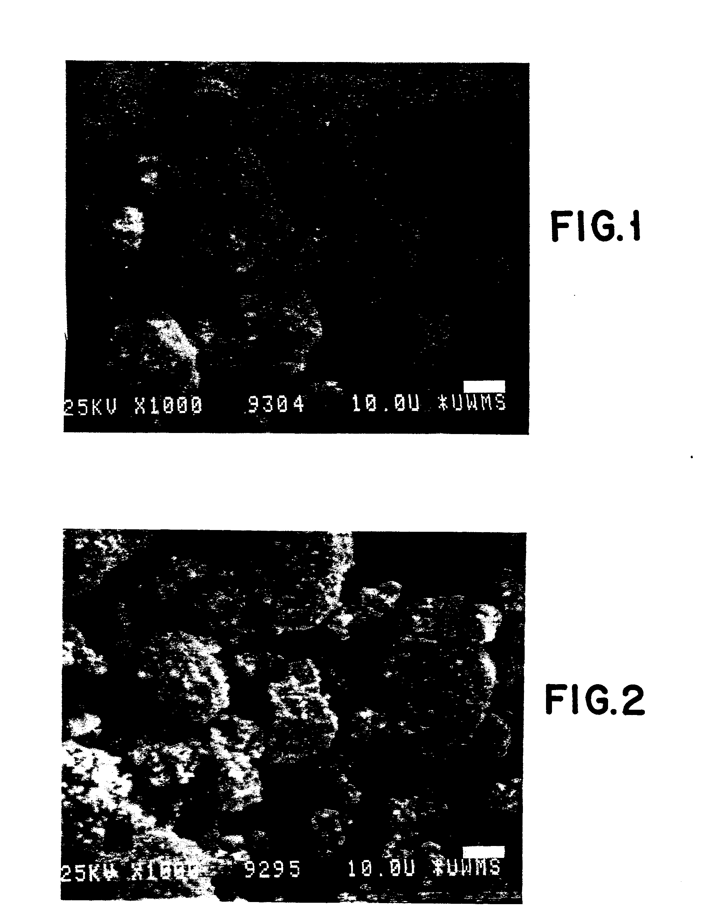

While it has been disclosed herein that, as best mode, the inventors contemplate reacting AgO with 7% PbS, this amount of PbS has been decided upon using an AgO synthesized at RAYOVAC Corporation. AgO from other sources having different characteristics, e.g., different particle sizes, can require use of more or less amounts of PbS to give optimum results. As a general rule, the finer the particle size of the AgO, the more PbS should be used. In like manner, those skilled in the art will appreciate that AgO powders of differing particle sizes may require reaction conditions which vary from the conditions of the best mode contemplated by applicants. As shown in Figure 1 of the drawing, applicants have

## TABLE III

| Test Designation | Cathode Formula(1) % Lead Compound Reacted | Pellet Resistivity Ω·cm | Cell Target | | | | | |
| --- | --- | --- | --- | --- | --- | --- | --- | --- |
| | | | 0 Months at 21°C | | | 3 Months at 21°C | | |
| | | | OCV V | CCV V | Z Ω | OCV V | CCV V | Z Ω |
| L | 0% | $1.62 \times 10^4$ | 1.868 | 1.087 | 54.9 | 1.87 | 0.95 | 120.0 |
| 7 | 3% PbS | 50 | 1.865 | 1.610 | 8.4 | 1.84 | 1.43 | 8.7 |
| 8 | 5% PbS | 15 | 1.855 | 1.627 | 8.4 | 1.78 | 1.37 | 8.7 |
| 9 | 7% PbS | 5 | 1.842 | 1.439 | 7.8 | 1.73 | 1.33 | 8.6 |
| 10 | 9% PbS | 5 | 1.840 | 1.429 | 7.6 | 1.73 | 1.33 | 8.5 |
| M | 3% Pb | 16 | 1.865 | 1.606 | 13.9 | 1.85 | 1.55 | 12.5 |
| N | 3% PbO | 19 | 1.865 | 1.620 | 11.9 | 1.85 | 1.53 | 12.9 |
| O | 3% $PbO_2$ | 2173 | 1.865 | 1.630 | 47.0 | 1.85 | 1.43 | 22.0 |

(1) All above mixes contained 0.5% PTFE powder for ease of pelleting.

provided a microphoto with scale of a representative sample of the AgO synthesized by RAYOVAC Corporation. In comparison to Figure 1 of the drawing, Figure 2 shows, on the same scale, the reaction product of RAYOVAC-synthesized AgO with 7% PbS. Figure 3 shows two curves from Differential Scanning Calorimetry tests. The upper curve is that of the AgO material depicted in Figure 1, the lower curve being that provided by the material of Figure 2. These curves demonstrate by both a slightly higher exotherm temperature and a flatter pre-exotherm portion that the material of Figure 2 is more thermally stable than the material of Figure 1.

Table IV parallels Table III in showing the effect of metal sulfides other than PbS on cathode pellet resistivity when the particular sulfides have been subjected, along with AgO to the process conditions contemplated by the best mode of the present invention.

## TABLE IV

| Test Designation | Cathode % Sulfide Reacted with AgO | Pellet Resistivity ohm-cm | Cell Target | | |
|---|---|---|---|---|---|
| | | | OCV V | CCV at $100\Omega$ V | Z $\Omega$ |
| 11 | 5% PbS | 15 | 1.850 | 1.428 | 8.5 |
| P | 5% CdS | $1.2 \times 10^4$ | 1.863 | 1.353 | 13.5 |
| Q | 5% CaS | 6300 | 1.860 | 1.301 | 14.7 |
| R· | 5% ZnS | $1.1 \times 10^4$ | 1.842 | 1.255 | 16.2 |
| S | 5% FeS | $3.9 \times 10^4$ | 1.857 | 1.251 | 12.3 |

The data in Table IV shows that of four non-plumbiferous sulfides reacted (word employed even if no reaction took place) with AgO, two showed no reduction in pellet resistivity, as compared to the $1.62 \cdot 10^4$ $\Omega \cdot cm$ of test L, one (FeS) apparently exhibited an increase in resistivity, and one (CaS) exhibited a significant decrease. However, in the case of CaS, the cell impedance was high and the closed circuit voltage under a 100 $\Omega$ load was low.

Table V presents data which demonstrates that cathodes made with the AgO-PbS reaction product of the present invention can also include other materials. While the data of Table V is limited to electrochemically active and electrochemically inactive oxides, this disclosure is not to be deemed limiting with respect to the type, character or nature of additives which can be used.

## TABLE V

| Test Designation | Cathode Formula % Additive[1] | Pellet Resistivity ohm-cm | Cell Target | | |
|---|---|---|---|---|---|
| | | | OCV V | CCV at $100\Omega$ V | Z $\Omega$ |
| 12 | 2% HgO | 8 | 1.860 | 1.467 | 6.6 |
| 13 | 5% NiOOH | 5 | 1.642 | 1.376 | 7.3 |
| 14 | 5% MnO$_2$ | 6 | 1.766 | 1.420 | 6.3 |
| 15 | 2% CaO | 8 | 1.763 | 1.411 | 7.1 |
| 16 | 2% MgO | 4 | 1.831 | 1.421 | 6.5 |
| 17 | 0% Additive | 5 | 1.788 | 1.443 | 5.4 |

(1) Dry blend of additives and reaction product of AgO/7%PbS reaction in hot aqueous alkali.

The data of Table V shows that the various oxides had a negligible effect on pellet resistivity and cell impedance and, with the exception of NiOOH, a negligible effect on all other cell characteristics measured.

In addition to additives or other materials such as the oxides disclosed in Table V, cathode pellets of the invention and cathode pellets of the invention consolidated in cathode cans, can also include surfaces of silver. Such silver surfaces, particularly at the surface adjacent to a separator, can be produced mechanically, e.g., by pressing a silver screen onto a consolidated cathode pellet surface or, perhaps more economically, can be produced by chemical reduction of silver oxide in the cathode material. While such chemical reduction can be accomplished by numerous water or liquid soluble reducing agents acting over a range of conditions, a most convenient reducing agent is hydrazine used as a 3% solution in methanol at ambient room temperature, i.e., 18°-23°C). Pressed pellets containing cathode material of the present invention can be treated with such a hydrazine solution for 1 to 10 minutes to provide a coverage of silver on all the surfaces of the pellet. If treatment is conducted after consolidation in a cathode can, the silver surface will be essentially limited to the exposed surface of the pellet which will lie adjacent to the separator. Table VI sets forth data with respect to pellets of cathode material within and without the invention and cells made therewith, the pellets which have been treated with hydrazine being coated with silver on all surfaces.

## TABLE VI

| Test Designation | Reaction Mix Formula | Pellet Hydrazined | Cell Target | | |
|---|---|---|---|---|---|
| | | | OCV | CCV at 100Ω | Z |
| | | | V | V | Ω |
| 18 | 93% AgO, 7% PbS | No | 1.788 | 1.443 | 5.4 |
| 19 | 93% AgO, 7% PbS | Yes | 1.628 | 1.456 | 5.3 |
| T | 95% AgO, 5% CdS | Yes | 1.857 | 1.397 | 18.6 |
| U | 95% AgO, 5% CaS | Yes | 1.858 | 1.392 | 13.7 |
| V | 95% AgO, 5% ZnS | Yes | 1.868 | 1.346 | 13.9 |
| W | 95% AgO, 5% FeS | Yes | 1.652 | 1.351 | 14.4 |

Table VII shows cell characteristics of two cells of the present invention, wherein the hydrazine treatment has been conducted on the pellet consolidated in the cathode can.

## TABLE VII

| Test Designation | Cathode Treatment[1] | Cell Target | | | | | |
|---|---|---|---|---|---|---|---|
| | | Initial | | | 3 Months at | | |
| | | OCV | CCV at 100Ω | Z | OCV | CCV at 100Ω | Z |
| | | V | V | Ω | V | V | Ω |
| 20 | Non-Hydrazine | 1.863 | 1.571 | 10.5 | 1.752 | 1.303 | 10.4 |
| 21 | Consolidation Hydrazine | 1.756 | 1.404 | 9.4 | 1.741 | 1.319 | 10.0 |

(1)  Cathode Formula: 97% reaction product of AgO and 7% PbS, 2% CdS and 1% PTFE.

Tables VI and VII show hydrazine treatment is adaptable to cathodes of the present invention and that cells containing such cathodes have superior characteristics, particularly cell impedances, as compared to illustrative cells outside the present invention.

The cathode material of the present invention can be blended with monovalent $Ag_2O$. Pellet and cell characteristics where such blends are used are set forth in Table VIII.

Table VIII shows increasing pellet impedance with increasing $Ag_2O$ content but relatively little change in cell characteristics. What is not shown, of course, is the decrease in coulometric capacity which inherently occurs when divalent silver is replaced by monovalent silver.

Estimated coulometric capacities under various loads typical of types of applications for RW-42 size cells (i.e., 11.6 mm in diameter and 5.4 mm in height) using conventional zinc anodes and the best mode of the cathode of the

## TABLE VIII

| Test Designation | Cathode, % Ag$_2$O Added to 7% PbS/AgO Reaction Product | Pellet Impedance* Ω · cm | OCV V | Cell Target CCV at 100Ω V | Z Ω |
|---|---|---|---|---|---|
| 22 | 0 | 5 | 1.788 | 1.443 | 5.4 |
| 23 | 10 | 7 | 1.777 | 1.458 | 5.8 |
| 24 | 20 | 15 | 1.744 | 1.458 | 5.7 |
| 25 | 30 | 17 | 1.731 | 1.459 | 5.8 |
| 26 | 40 | 35 | 1.733 | 1.453 | 6.1 |
| 27 | 50 | 42 | 1.708 | 1.442 | 6.9 |

present invention are set forth in Table IX to show the practical application of the present invention.

## TABLE IX

| Application | Load Ω | mAh Capacity to 1.30 V | mAh to 0.90 V |
|---|---|---|---|
| Watch/calculator | 100,000 | 228 | 230 |
| Watch/calculator | 6,500 | 221 | 223 |
| Hearing Aid | 625 | 205 | 217 |
| Hearing Aid | 300 | 188 | 199 |

Except where it might be stated otherwise, all percentages set forth in this specification and the appended claims are percentages by weight.

9

## Claims

1. A stable AgO-containing cathode material for an electrochemical cell showing under X-ray analysis the presence of AgO, $Ag_5Pb_2O_6$, $Ag_2PbO_2$ and $Ag_2O$ and showing when tested by differential scanning calorimetry a thermal stability greater than that of the reactant AgO, said material can be obtained by reacting powdered AgO and powdered lead sulfide in a liquid aqueous alkaline medium at a temperature of at least $40°C$ up to the boiling point of the medium, preferably at a temperature of $70°C$ to $90°C$, the weight ratio of AgO to lead sulfide being in the range of 2.3 : 1 to 31 : 1; and recovering the reaction product from the aqueous medium.

2. The cathode material as in claim 4 wherein the weight ratio of AgO to lead sulfide is in the range of 10 : 1 to 15 : 1.

88 107 956.0
EP-62 618

FIG.1

FIG.2

## FIG.3

88 107 956.0
EP-62 618

EP 0 292 851 A2